# FASCICULE DE BREVET EUROPEEN

(11) **EP 2 227 511 B1**
(45) Date de publication et mention de la délivrance du brevet: **21.05.2014**
(21) Numéro de dépôt: 08761921.9
(22) Date de dépôt: 10.01.2008
(51) Int. Cl.: C09K 5/04, C11D 7/50

(54) **COMPOSITION A BASE DE PERFLUOROBUTYL ETHER**
ZUSAMMENSETZUNG MIT PERFLUORBUTYLETHER
COMPOSITION CONTAINING PERFLUOROBUTYL ETHER

(43) Date de publication de la demande: 15.09.2010
(73) Titulaire: ARKEMA FRANCE, 92700 Colombes (FR)
(72) Inventeur: LALLIER, Jean-Pierre, F-69720 Saint-Bonnet-de-Mure (FR)
(74) Mandataire: Dang, Doris
(86) Numéro de dépôt international: PCT/FR2008/050048
(87) Numéro de publication internationale: WO 2009/087322

(56) Documents cités:
- EP-A- 1 593 734
- FR-A- 2 905 701
- US-A1- 2005 090 408

## Description

La présente invention concerne des mélanges ou compositions azéotropiques ou du type azéotropique de perfluorobutyl éther. Elle a plus particulièrement pour objet des compositions comprenant au moins un éther de nonafluorobutyl alkyle et un composé biodégradable.

L'atmosphère terrestre bloque l'émission IR en provenance de la Terre, ce qui est à l'origine d'un effet de serre et d'une température modérée, propice à la vie. Dans l'atmosphère, c'est principalement le gaz carbonique, CO₂ responsable de cet effet de serre naturel. L'émission par l'homme de certains gaz (dont CO₂ issu des énergies fossiles) amplifie cet effet, provoquant le réchauffement de la planète avec ses conséquences sur le climat : tempêtes, inondations, variation de surface de la banquise et recul des glaciers.

Le protocole de Kyoto (1997) vise à réduire l'émission de 6 gaz à effet de serre (CO₂, CH₄, N₂O, HFC, PFC, SF6) à l'échéance 2008 / 2012, de 5 % au niveau mondial par rapport à 1990 (année de référence).

L'effet de serre d'un produit donné est quantifié par son GWP (Global Warming Potential) qui tient compte de l'effet intrinsèque d'absorption du rayonnement par la molécule mais aussi de la durée de vie de la molécule dans l'atmosphère (ou ce qui revient au même de sa concentration durant une période de temps considérée, le plus souvent 1 siècle). Ce GWP est donné par rapport au CO₂, pris comme gaz de référence.

Les solvants fluorés sont depuis longtemps utilisés dans les industries de haute technologie telles que l'électronique, l'aéronautique, la mécanique de précision ou le secteur médical. Dans ces domaines, l'objectif reste toujours le même à savoir d'obtenir une surface de très grande propreté, qu'il s'agisse d'éliminer des salissures grasses plus ou moins polaires, particules solides, flux électronique ou de l'eau.

En nettoyage de précision, on est souvent en présence de pièces très complexes pourvues de rainures, cannelures ou trous borgnes que le solvant devra impérativement mouiller afin d'être efficace sur ces endroits difficiles. Les solvants fluorés constituent la famille de solvants apportant le meilleur mouillage possible d'une surface, ce qui se traduit par des tensions superficielles très basses (18,4 mN/m pour le HCFC 141 b et 13,3 mN/m pour le HFC 365mfc contre 32,3 mN/m pour le perchloroéthylène, autre solvant de nettoyage non fluoré par exemple). Un autre avantage d'un mouillage élevé est l'obtention d'un séchage plus rapide des substrats.

A masse moléculaire pratiquement identique les solvants fluorés ont des températures d'ébullition plus basses et des tensions de vapeur plus élevées. Ainsi, le HCFC 141 b boue à 32°C alors que le chloroforme boue à 61°C ; Ces deux propriétés (bas point d'ébullition et tension de vapeur élevée) sont favorables à l'usage de ces solvants dans des machines industrielles classiques qui fonctionnent avec une phase vapeur permettant le rinçage, le séchage des pièces ainsi que la régénération du solvant qui est en permanence distillé. Le procédé de fonctionnement de ces machines munies d'un puissant système de refroidissement par condensation des vapeurs sur un serpentin minimise l'inconvénient des fortes tensions de vapeur utilisées. Les industriels souhaitent des solutions de substitution pouvant fonctionner sur leur parc machines existant.

Des compositions azéotropiques consistant en tétrahydrofuranne et le perfluorobutyl methyl ether sont divulguées dans le document EP 1593 734.

Le document US 2005/090408 décrit l'addition d'un alcool ou d'un éther cyclique à un solvant fluoré non polaire afin d'améliorer la solubilité des polyéthers perfluorés polaires contenus dans le solvant.

Par ailleurs, les hydrofluorocarbures sont largement utilisés en réfrigération et dans des procédés de transfert de chaleur.

La présente invention fournit des compositions ayant un bas GWP et qui ont l'avantage d'être biodégradables.

Les compositions selon la présente invention comprennent du méthyltetrahydrofuranne et au moins un nonafluorobutyl alkyl éther de formule C₄F₉OR avec R représentant une chaîne alkyle saturé linéaire ou ramifié ayant de 1 à 4 atomes de carbone. Avantageusement, les compositions comprennent de 5 - 40 % en poids de méthyltetrahydrofuranne et de 60 - 95 % en poids de nonafluorobutyl alkyl éther de formule C₄F₉OR.

Le méthyltetrahydrofuranne préféré est le 2- méthyltetrahydrofuranne.

Parmi les nonafluorobutyl alkyl éther de formule C₄F₉OR, on préfère le nonafluorobutyl méthyl éther et le nonafluorobutyl éthyl éther.

Quel que soit R, le nonafluorobutyl alkyl éther préféré consiste essentiellement de nonafluoro-n-butyl alkyl éther et de nonafluoroisobutyl alkyl éther.

Les compositions azéotropiques ou du type azéotropiques sont particulièrement intéressantes.

Lorsque R est le méthyle, les compositions azéotropiques ou du type azéotropique comprennent de 5 - 15 % en poids de méthyltetrahydrofuranne et de 85 - 95 % en poids de nonafluorobutyl méthyl éther. Une composition azéotropique comprenant 8 % en poids de méthyltetrahydrofuranne et 92 % en poids de nonafluorobutyl méthyl éther a une température d'ébullition de 59,7° C à pression atmosphérique.

Lorsque R est l'éthyle, les compositions azéotropiques ou du type azéotropique comprennent de 10 - 40 % en poids de méthyltetrahydrofuranne et de 60 - 90 % en poids de nonafluorobutyl éthyl éther. Une composition azéotropique comprenant 24,6 % en poids de méthyltetrahydrofuranne et 75,4 % en poids de nonafluorobutyl éthyl éther a une température d'ébullition de 71,6°C à pression atmosphérique (103,3 kPa).

Une composition azéotropique est un mélange liquide de deux ou plusieurs composés ayant un point d'ébullition constant (c'est-à-dire pas de tendance à se fractionner lors de l'ébullition ou de l'évaporation) qui peut être soit au-dessus ou en-dessous des points d'ébullition des composés respectifs. Ainsi, la composition de la vapeur formée durant l'évaporation est identique ou pratiquement identique à la composition liquide initiale.

Une composition du type azéotropique est un mélange liquide de deux ou plusieurs composés ayant un point d'ébullition substantiellement constant c'est-à-dire qui se comporte comme un composé unique. La détermination d'une composition du type azéotropique peut se faire par évaporation ou distillation ou en comparant la pression de vapeur au point de bulle ou de rosée à une température donnée.

L'utilisation d'un azéotrope est particulièrement intéressante dans le cas d'usage industriel, pour la régénération de la composition, par exemple lorsque celle-ci est saturée en salissures. Une simple distillation permet de récupérer la composition azéotropique initiale sans aucun fractionnement des constituants.

En outre, le 2-méthyltétrahydrofuranne (2-MeTHF) présente l'avantage d'être issu de matières premières renouvelables telles que le furfural obtenu à partir de matériaux cellulosiques. Ainsi, les polysacccharides d'hémicellulose sont des polymères à base de sucres contenant cinq atomes de carbone. Lorsque l'hémicellulose est chauffée en présence d'acide sulfurique, on obtient des pentoses (sucres contenant cinq atomes de carbone) tels que le xylose. Si l'on poursuit la déshydratation thermique du xylose, celui-ci se transforme en furfural.

Outre leur bas GWP et leur biodégradabilité, certaines compositions selon la présente invention sont ininflammables (point éclair en coupe fermée supérieur à 55°C suivant la norme ASTM D3828) et conviennent tout particulièrement comme solvants de nettoyage ou réfrigérant pour des applications de chauffage et de refroidissement. Elles peuvent également être utilisées comme agent d'expansion.

### PARTIE EXPERIMENTALE

### EXEMPLE 1

La température du mélange liquide à ébullition est mesurée en utilisant une technique ébulliométrique. L'ébulliomètre est d'abord chargé avec une quantité de nonafluorobutyl méthyl éther puis porté à ébullition. La température d'ébullition à pression atmosphérique est enregistrée après que l'état d'équilibre est atteint. Une aliquote de méthyltetrahydrofuranne est ensuite introduite dans l'ébulliomètre et la température enregistrée de nouveau après avoir atteint l'état d'équilibre.

Le tableau I reprend les mesures de point d'ébullition à 103,3 kPa pour divers mélange de nonafluorobutyl méthyl éther et de méthyltetrahydrofuranne.

**Tableau I**

| % en poids de nonafluorobutyl méthyl éther | % en poids de méthyltetrahydrofuranne | Point d'ébullition (°C) à 103,3 kPa |
|---|---|---|
| 100 | 0 | 61 |
| 90 | 10 | 60,7 |
| 80 | 20 | 62,3 |
| 70 | 30 | 64,2 |
| 55 | 45 | 66,6 |
| 45 | 55 | 67,4 |
| 35 | 65 | 68,7 |
| 25 | 75 | 70,4 |
| 0 | 100 | 80 |

Une distillation fractionnée d'un mélange liquide contenant 50 % en poids de nonafluorobutyl méthyl éther et 50 % en poids de méthyltetrahydrofuranne a mis en évidence une composition azéotropique de 92 % en poids de nonafluorobutyl méthyl éther et 8 % en poids de méthyltetrahydrofuranne avec un point d'ébullition de 59,7°C à une pression de 103,3 kPa.

### EXEMPLE 2

On procède à l'ébulliométrie comme décrit dans l'exemple 1.

Le tableau II reprend les mesures de point d'ébullition à 103,3 kPa pour divers mélange de nonafluorobutyl éthyl éther et de méthyltetrahydrofuranne.

**Tableau II**

| % en poids de nonafluorobutyl éthyl éther | % en poids de méthyltetrahydrofuranne | Point d'ébullition (°C) à 103,3 kPa |
|---|---|---|
| 100 | 0 | 75,7 |
| 88 | 12 | 72,9 |
| 78 | 22 | 72,2 |
| 70 | 30 | 72,2 |
| 60 | 40 | 72,6 |
| 50 | 50 | 73,1 |
| 40 | 60 | 74 |
| 0 | 100 | 80 |

Une distillation fractionnée d'un mélange liquide contenant 50 % en poids de nonafluorobutyl éthyl éther et 50 % en poids de méthyltetrahydrofuranne a mis en évidence une composition azéotropique de 75,4 % en poids de nonafluorobutyl éthyl éther et 24,6 % en poids de méthyltetrahydrofuranne avec un point d'ébullition de 71,6°C à une pression de 103,3 kPa.

### Mode opératoire général pour les tests de nettoyage

Des plaques en acier inoxydable 2 x 5 cm sont préalablement dégraissées au FORANE 141 b. Ces plaques sont chacune pesées avant le test ce qui constitue la tare. On les enduit ensuite sur une seule face avec de l'huile REDUCTELF SP 460. On pèse la plaque enduite d'huile, et on en déduit la quantité d'huile enduite par différence avec la tare. Ensuite, on trempe pendant 5 min, sans agitation, sans ultrasons, la plaque enduite d'huile dans un bécher contenant 100 ml de composition à évaluer. Une fois sortie, la plaque est laissée égouttée sous ventilation pendant 15 min et au bout de ce temps on détermine par pesée la quantité d'huile restante. Par différence avec la quantité d'huile initiale, on calcule le pourcentage d'huile éliminée.

### EXEMPLE 3

Avec une composition de nonafluorobutyl méthyl éther, on obtient un pourcentage nul d'huile éliminée.

### EXEMPLE 4

Avec une composition comprenant 8 % en poids de 2-MeTHF et 92 % en poids de nonafluorobutyl méthyl éther, 75 % en poids d'huile sont éliminés. Un simple chauffage à 45°C, ou une simple agitation ou encore l'application d'ultrasons à température ambiante (20°C) permet d'éliminer la totalité de l'huile déposée. De surcroît, on n'observe pas la dissolution de l'huile mais le décollement de l'huile qui remonte à la surface du liquide (mécanisme de rolling up). Ce mécanisme est plus intéressant que celui de solubilisation qui conduit rapidement à une saturation du solvant.

### Mode opératoire général pour les tests de dissolution d'huile

On introduit de l'huile de silicone (Crompton L9000-1000 de la société Crompton Corporation (Greenwich, USA) dans 100 ml de la composition à évaluer et on détermine la quantité d'huile de silicone solubilisée instantanément à température ambiante (on l'exprime en % d'huile solubilisée par rapport au mélange).

### EXEMPLE 5

Avec la composition azéotropique de 75,4 % en poids de nonafluorobutyl éthyl éther et 24,6 % en poids de méthyltetrahydrofuranne, plus de 17 % en poids d'huile sont solubilisés.

### EXEMPLE 6

Avec le nonafluorobutyl éthyl éther, au plus 2 % en poids d'huile sont solubilisés et on observe une démixtion.

## Revendications

1. Compositions comprenant du méthyltetrahydrofuranne et au moins un nonafluorobutyl alkyl éther de formule C₄F₉OR avec R représentant une chaîne alkyle saturé linéaire ou ramifié ayant de 1 à 4 atomes de carbone.

2. Compositions selon la revendication 1 **caractérisées en ce qu'**elles comprennent de 5 - 40 % en poids de méthyltetrahydrofuranne et de 60 - 95 % en poids de nonafluorobutyl alkyl éther de formule C₄F₉OR.

3. Compositions selon la revendication 1 ou 2 **caractérisées en ce que** le nonafluorobutyl alkyl éther de formule C₄F₉OR est le nonafluorobutyl méthyl éther et le nonafluorobutyl éthyl éther.

4. Compositions selon l'une quelconque des revendications 1 à 3 **caractérisées en ce que** le nonafluorobutyl alkyl éther consiste essentiellement de nonafluoro-n-butyl alkyl éther et de nonafluoroisobutyl alkyl éther.

5. Compositions selon l'une quelconque des revendications 1 à 4 **caractérisées en ce qu'**elles sont azéotropiques ou du type azéotropique.

6. Compositions selon la revendication 5 **caractérisées en ce qu'**elles comprennent de 5 - 15 % en poids de méthyltetrahydrofuranne et de 85 - 95 % en poids de nonafluorobutyl méthyl éther.

7. Composition azéotropique comprenant de 8 % en poids de méthyltetrahydrofuranne et 92 % en poids de nonafluorobutyl méthyl éther ayant une température d'ébullition de 59,7°C à pression atmosphérique (103,3 kPa).

8. Compositions selon la revendication 5 **caractérisées en ce qu'**elles comprennent de 10 - 40 % en poids de méthyltetrahydrofuranne et de 60 - 90 % en poids de nonafluorobutyl éthyl éther.

9. Composition azéotropique comprenant 24,6 % en poids de méthyltetrahydrofuranne et 75,4 % en poids de nonafluorobutyl éthyl éther ayant une température d'ébullition de 71,6° C à pression atmosphérique (103,3 kPa).

10. Refrigérant **caractérisé en ce qu'**il comprend une composition selon l'une quelconque des revendications précédentes.

11. Solvant **caractérisé en ce qu'**il comprend une composition selon l'une quelconque des revendications 1 à 9.

## Patentansprüche

1. Zusammensetzungen, umfassend Methyltetrahydrofuran und mindestens einen Nonafluorbutylalkylether der Formel C₄F₉OR, wobei R für eine lineare oder verzweigte gesättigte Alkylkette mit 1 bis 4 Kohlenstoffatomen steht.

2. Zusammensetzungen nach Anspruch 1, **dadurch gekennzeichnet, dass** sie 5-40 Gew.-% Methyltetrahydrofuran und 60-95 Gew.-% Nonafluorbutylalkylether der Formel C₄F₉OR umfassen.

3. Zusammensetzungen nach Anspruch 1 oder 2, **dadurch gekennzeichnet, dass** es sich bei dem Nonafluorbutylalkylether der Formel C₄F₉OR um Nonafluorbutylmethylether und Nonafluorbutylethylether handelt.

4. Zusammensetzungen nach einem der Ansprüche 1 bis 3, **dadurch gekennzeichnet, dass** der Nonafluorbutylalkylether im Wesentlichen aus Nonafluor-n-butylalkylether und Nonafluorisobutylalkylether besteht.

5. Zusammensetzungen nach einem der Ansprüche 1 bis 4, **dadurch gekennzeichnet, dass** sie azeotrop oder azeotropartig sind.

6. Zusammensetzungen nach Anspruch 5, **dadurch gekennzeichnet, dass** sie 5-15 Gew.-% Methyltetrahydrofuran und 85-95 Gew.-% Nonafluorbutylmethylether umfassen.

7. Azeotrope Zusammensetzung, die 8 Gew.-% Methyltetrahydrofuran und 92 Gew.-% Nonafluorbutylmethylether umfasst und einen Siedepunkt von 59,7°C bei Atmosphärendruck (103,3 kPa) aufweist.

8. Zusammensetzungen nach Anspruch 5, **dadurch gekennzeichnet, dass** sie 10-40 Gew.-% Methyltetrahydrofuran und 60-90 Gew.-% Nonafluorbutylethylether umfassen.

9. Azeotrope Zusammensetzung, die 24,6 Gew.-% Methyltetrahydrofuran und 75,4 Gew.-% Nonafluorbutylethylether umfasst und einen Siedepunkt von 71,6°C bei Atmosphärendruck (103,3 kPa) aufweist.

10. Kältemittel, **dadurch gekennzeichnet, dass** es eine Zusammensetzung nach einem der vorhergehenden Ansprüche umfasst.

11. Lösungsmittel, **dadurch gekennzeichnet, dass** es eine Zusammensetzung nach einem der Ansprüche 1 bis 9 umfasst.

## Claims

1. Compositions comprising methyltetrahydrofuran and at least one nonafluorobutyl alkyl ether of formula C₄F₉OR with R representing a linear or branched saturated alkyl chain having from 1 to 4 carbon atoms.

2. Compositions according to Claim 1, **characterized in that** they comprise 5-40 wt% of methyltetrahydrofuran and 60-95 wt% of nonafluorobutyl alkyl ether of formula C₄F₉OR.

3. Compositions according to Claim 1 or 2, **characterized in that** the nonafluorobutyl alkyl ether of formula C₄F₉OR is nonafluorobutyl methyl ether and nonafluorobutyl ethyl ether.

4. Compositions according to any one of Claims 1 to 3, **characterized in that** the nonafluorobutyl alkyl ether mainly consists of nonafluoro-n-butyl alkyl ether and nonafluoroisobutyl alkyl ether.

5. Compositions according to any one of Claims 1 to 4, **characterized in that** they are azeotropic or of azeotropic type.

6. Compositions according to Claim 5, **characterized in that** they comprise 5-15 wt% of methyltetrahydrofuran and 85-95 wt% of nonafluorobutyl methyl ether.

7. Azeotropic composition comprising 8 wt% of methyltetrahydrofuran and 92 wt% of nonafluorobutyl methyl ether having a boiling point of 59.7°C at atmospheric pressure (103.3 kPa).

8. Compositions according to Claim 5, **characterized in that** they comprise 10-40 wt% of methyltetrahydrofuran and 60-90 wt% of nonafluorobutyl ethyl ether.

9. Azeotropic composition comprising 24.6 wt% of methyltetrahydrofuran and 75.4 wt% of nonafluorobutyl ethyl ether having a boiling point of 71.6°C at atmospheric pressure (103.3 kPa).

10. Refrigerant **characterized in that** it comprises a composition according to any one of the preceding claims.

11. Solvent **characterized in that** it comprises a composition according to any one of Claims 1 to 9.
